**Europäisches Patentamt**

**European Patent Office**

**Office européen des brevets**

(19)

(11) Veröffentlichungsnummer: **0 102 079**

**A2**

(12) # EUROPÄISCHE PATENTANMELDUNG

(21) Anmeldenummer: **83108501.4**

(22) Anmeldetag: **29.08.83**

(51) Int. Cl.³: **G 05 B 19/12**

(30) Priorität: **30.08.82 DE 3232165**

(43) Veröffentlichungstag der Anmeldung:
**07.03.84 Patentblatt 84/10**

(84) Benannte Vertragsstaaten:
**FR GB IT NL SE**

(71) Anmelder: **Koelichen, Harald
Isardamm 21
D-8192 Geretsried(DE)**

(72) Erfinder: **Koelichen, Harald
Isardamm 21
D-8192 Geretsried(DE)**

(74) Vertreter: **Koch, Günther, Dipl.-Ing. et al,
Patentanwälte Dipl.-Ing. C. Wallach Dipl.-Ing. G. Koch,
Dr. T. Haibach Dipl.-Ing. R. Feldkamp Kaufingerstrasse 8
D-8000 München 2(DE)**

(54) Verfahren und Anordnung zum Programmieren eines Festwert-Speichers eines digital gesteuerten Zeichengerätes.

(57) Das digital gesteuerte Zeichengerät weist eine Zeichenspitze auf, die in Abhängigkeit von aus einem Informationsspeicher (16) abrufbaren Daten steuerbar ist. Der Informationsspeicher (16) ist austauschbar und in seiner Speicherkapazität auf eine der Tastatur entsprechende Zahl von zeichnerischen Darstellungen, wie alphanumerischen und graphischen Zeichen, Symbolen, Figuren und komplexen zeichnerischen Darstellungen abgestimmt. Eine Eingabeeinrichtung (14) ermöglicht es, die Informationsspeicher (16) den jeweiligen individuellen Erfordernissen gemäß so zu programmieren, daß jeder Taste der Tastatur die Daten eines beliebigen Zeichens an einer bestimmten Speicheradresse zugeordnet werden können. Zu der Anordnung gehört ein Katalog, der die zeichnerischen Darstellungen einerseits und diesen zugeordnet codierte Daten als Lesesymbole trägt. An den Eingang der Eingabeeinrichtung ist eine Lesestufe (12) angeschaltet, der die codierten Lesesymbole beliebiger Zeichen zuführbar sind, wobei die erkannten Lesesymbole eines Zeichens als Informationsdaten von der Eingabeeinrichtung an der gewünschten Adresse des Informationsspeicher (16) ablesbar sind.

Fig. 1

EP 0 102 079 A2

Patentanwälte
Dipl.-Ing. C. Wallach
Dipl.-Ing. G. Koch
Dr. T. Haibach
Dip! : . · F ldkamp
CC 0 München 2
Kau..nge.sir. 8, T. (0u9) 2608078

- 1 -

## Verfahren und Anordnung zum Programmieren eines Festwert-Speichers eines digital gesteuerten Zeichengerätes

Die Erfindung bezieht sich auf ein Verfahren und eine Anordnung zum Programmieren eines Festwert-Speichers eines digital gesteuerten Zeichengerätes. Derartige Zeichengeräte ermöglichen sowohl eine vollautomatische Beschriftung von Zeichnungen als auch die Anfertigung der Zeichnung selbst, wobei durch Tastenabruf nacheinander bestimmte gespeicherte Zeichen oder Symbole in bestimmter Zuordnung zueinander aufgezeichnet werden.

Da jeder Anwender andere zeichnerische Darstellungen bevorzugt benötigt und in wirtschaftlicher Weise nicht alle vorkommenden Zeichen in Speichern zur Verfügung gestellt werden können, werden bei einem bekannten System vom Hersteller die einzelnen Informationsspeicher in Form von Steckmoduln entsprechend dem individuellen Wunsch des Benutzers programmiert. Der Benutzer gibt zu diesem Zweck dem Hersteller an, welche zeichnerischen Darstellungen, wie alphanumerische und graphische Zeichen, Symbole, Figuren oder komplexe zeichnerische Darstellungen, die er aus einem Katalog aussuchen kann, in einem Informationsspeicher an jeweils einer bestimmten Adresse eingegeben werden sollen. Dies hat gegenüber festprogrammierten Informationsspeichern den Vorteil, daß der Benutzer sich die von ihm benötigten zeichnerischen Darstellungen selbst zusammenstellen kann und der zur Verfügung stehende Speicherraum nicht durch für ihn unnütze Daten belegt wird.

Nachteilig an diesem System ist, daß zwischen Bestellung und Lieferung der betreffenden Moduln nach Kundenwunsch unvermeidbar eine erhebliche Zeit durch die Notwendigkeit der Programmierung beim Hersteller dieser Software verstreicht.

Der Erfindung liegt die Aufgabe zugrunde ein Verfahren und eine Anordnung zum Programmieren eines Festwert-Speichers eines digital gesteuerten Zeichengerätes derart auszubilden, daß Daten in den Festwert-Speicher gemäß individuellen Wünschen des Benutzers von diesem einfach und schnell eingebbar sind.

Gelöst wird die gestellte Aufgabe verfahrensmäßig durch die im Kennzeichnungsteil des Patentanspruchs 1 und anordnungsmäßig durch die im Kennzeichnungsteil des Patentanspruchs 2 angegebenen Merkmale.

Der Erfindung liegt demgemäß die Erkenntnis zugrunde, daß es einem Benutzer nicht zugemutet werden kann, eine Programmierung mittels handelsüblicher Programmiergeräte selbst vorzunehmen, weil selbst bei Angabe der erforderlichen Programmierschritte diese Tätigkeit für den Benutzer zu aufwendig ist und bei den meisten in Betracht kommenden zeichnerischen Darstellungen eine erhebliche Anzahl von Einzelschritten erforderlich und die Korrektheit der Eingabe nicht gewährleistet ist.

Durch die Erfindung wird es demgegenüber möglich, die Programmierung automatisch mittels eines maschinellen Lesegerätes vorzunehmen, wodurch Programmierungsfehler ausgeschaltet werden und das Einlesen der einzelnen Zeichen hintereinander sehr schnell erfolgen kann. Der Benutzer benötigt dazu lediglich katalogisierte Vordrucke, die ihm die zu zeichnenden zeichnerischen Darstellungen angeben und denen räumlich codierte Informationen sowie eventuell dazugehörige Funktionsbefehle zugeordnet sind, die dann automatisch im Speicher abgelegt werden.

Eine besonders einfache Art der Codierung ergibt sich bei Verwendung eines optischen Abtastsystems, weil die beispielsweise als Strichcode ausgebildeten Lesesymbole zusammen mit dem betreffenden Zeichen oder Symbol einfach aufgedruckt und dann mittels eines Lesegriffels abgenommen werden können.

Es ist zwar aus der DE-OS 23 38 773 bereits eine Anordnung zum Erfassen und Übertragen von Daten bekannt, bei der örtlich verteilt vorliegende Informationen einer Zentraleinheit zugeführt und dort verarbeitet werden, wobei über eine optische Leseeinrichtung eine Waren- oder Qualitätserfassung möglich ist. Für die Programmierung eines Zeichengerätes ist diese bekannte Anordnung jedoch nicht anwendbar.

Es ist ferner aus "HEWLETT - PACHARD - JOURNAL, Januar 1981, Titelblatt und Seite 3 bis 10 bereits bekannt, durch Abtasten eines Balkencodes mittels eines Lichtgriffels Speicher eines Taschenrechners zu programmieren, jedoch handelt es sich hierbei um reine Rechenbefehle, während durch die Erfindung eine individuell abrufbare Beschriftungs- oder Zeichenfolge bei einem digital gesteuerten Zeichengerät erreicht wird.

Solche optischen Einlesevorrichtungen werden auch benutzt um z.B. einen Video-Recorder in Verbindung mit einem Fernsehgerät dadurch auf ein vorbestimmtes Programm zu schalten, daß mittels des Lesegriffels Lesesymbole einer Programmzeitschrift in einen Informationsspeicher eingelesen werden, die dann zu einer bestimmten Zeit (oder in Abhängigkeit von einem vom Fernsehsender abgestrahlten Codesignal) den Video-Recorder einschalten. Hier handelt es sich jedoch nur um Ein- und Abschaltvorgänge, die nicht vergleichbar sind mit der Problematik, die sich aus der Notwendigkeit der individuellen kundenspezifischen Zusammenstellung von zeichnerischen Darstellungen ergibt.

Es ist ferner bekannt, in der industriellen Fertigung beispielsweise bei der Autoherstellung individuelle Kundenwünsche in codierter Form einzugeben, um unterschiedliche Arbeitsabläufe zu gewährleisten. Die Codierung selbst wird jedoch auch bei diesem bekannten System über eine individuelle Programmierung vorgenommen.

Nachstehend werden Ausführungsbeispiele der Erfindung anhand der Zeichnung beschrieben. In der Zeichnung zeigen:

Fig. 1   ein Blockschaltbild der erfindungsgemäßen Anordnung;

Fig. 2    eine erfindungsgemäß ausgebildete
         Programmiervorrichtung mit optischer
         Abtastung und

Fig. 3    eine erfindungsgemäß ausgebildete
         Programmiervorrichtung mit magnetischer
         Abtastung.

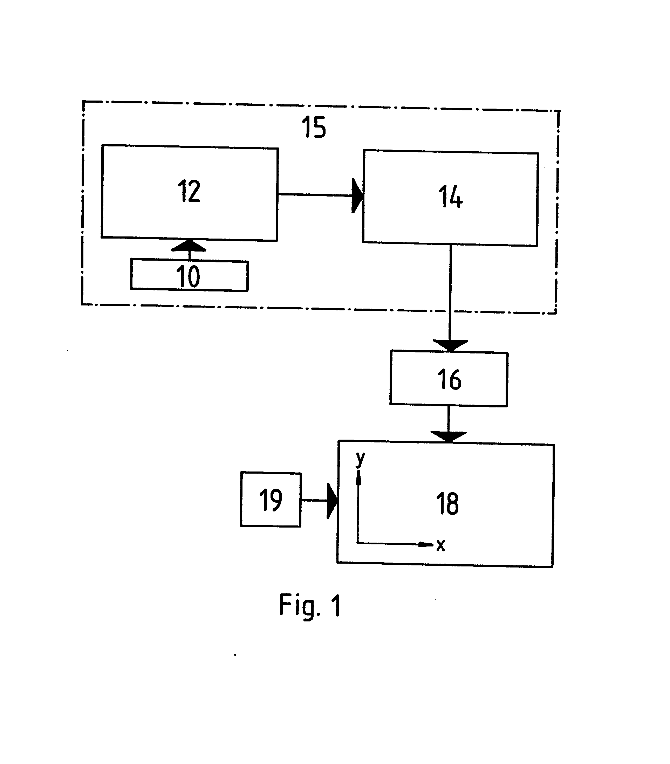

Gemäß Figur 1 weist die Anordnung zum Programmieren des Festwert-Speichers eines digital gesteuerten Zeichengerätes codierte Daten 10 als Lesesymbole, beispielsweise als Strichcode oder als Magnetcode oder auch in Schriftform auf. Diese Lesesymbole sind jeweils vom Hersteller einer zeichnerischen Darstellung, d.h. alphanumerischen und graphischen Zeichen, Symbolen, Figuren etc. zugeordnet. Diese Lesesymbole sind durch eine Lesestufe 12 erkennbar, die an den Eingang einer Eingabeeinrichtung 14 angeschlatet ist. Der Ausgang der aus Lesestufe 12 und Eingabeeinrichtung 14 bestehenden Programmiervorrichtung 15 wird den Speicheradressen eines Informationsspeichers 16 zugeführt, der vorzugsweise als Steckmodul ausgebildet ist und der in ein automatisch arbeitendes Zeichengerät 18 einsetzbar ist. Aus diesem Informationsspeicher, dessen Speicherinhalt auf eine Tastatur 19 abgestimmt ist, können die einzelnen zeichnerischen Darstellungen über diese Tastatur 19 abgerufen werden.

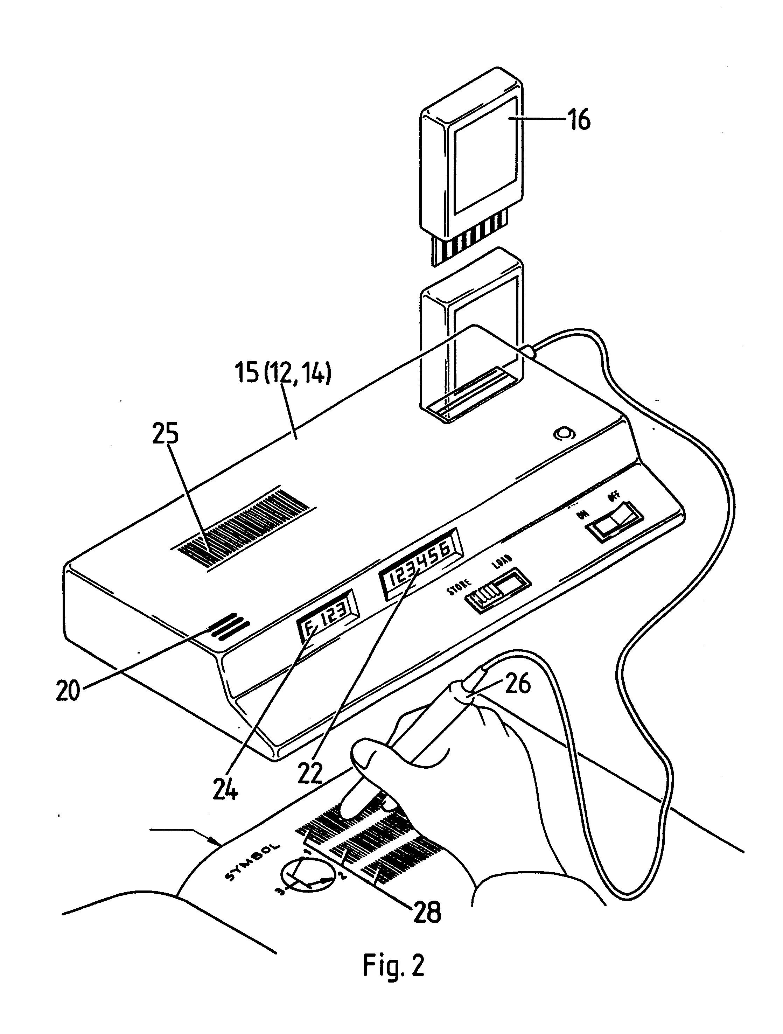

Bei der Programmiervorrichtung nach Figur 2 ist ein Codeleser in Gestalt eines Lichtgriffels 26 vorgesehen, mit dem die Informationen einer Strichmarkierung 28 eingegeben werden können, die sich über mehrere Zeilen erstrecken können, wobei Vorsorge dafür getroffen worden ist, daß jede Zeile vollständig abgefühlt und keine Zeile übersprungen wird. Dies kann durch Codeinformationen am Anfang und am Ende jeder Zeile erfolgen. Dieser Lichtgriffel 26 ist mit der die Lesestufe 12 und die Eingabeeinrichtung 14 umfassenden Programmiervorrichtung 15 verbunden. Das jeweils eingelesene Symbol der Schriftzeichen wird nach dem Informationsspeicher 16 weitergegeben. Der Informationsspeicher 16 ist als Constant-Memory-Modul auf RAM-Basis aufgebaut. Ein akustischer Signalgeber 20 kennzeichnet mit einem Ton ein erfolgreiches Einlesen, während bei Falscheinlesen mehrere Töne hörbar werden. Ein LCD-Display 22 dient zur Anzeige des Ladezustandes der RAM's des jeweils eingestellten Constant-Memory-Moduls und die LCD-Kennzahl 24 dient der Schreibtastenzuordnung. Ein Prüfcode 25 ist für die Nullstellung der LCD's und zum Löschen des Ladegerätes vorgesehen. An die Programmiervorrichtung oder das Zeichengerät kann ein Datensichtgerät anschaltbar sein, auf welchem die auf den einzelnen Adressen abgelegten Daten in die zugeordneten zeichnerischen Darstellungen umgeformt werden können.

Damit der Benutzer weiß, welche graphischen Daten auf welcher Schreibtaste abgelegt sind, ist es mit dem elektronischen Beschriftungsgerät über eine Funktionstaste möglich, die Reihenfolge der Symbolablage auf der jeweiligen Schreibtaste auszuplotten.

Die Lesestufe 12 speichert alle eingelesenen Daten und gibt bei Umschaltung auf Laden über die Eingabeeinheit alle Daten in den Informationsspeicher 16 ein.

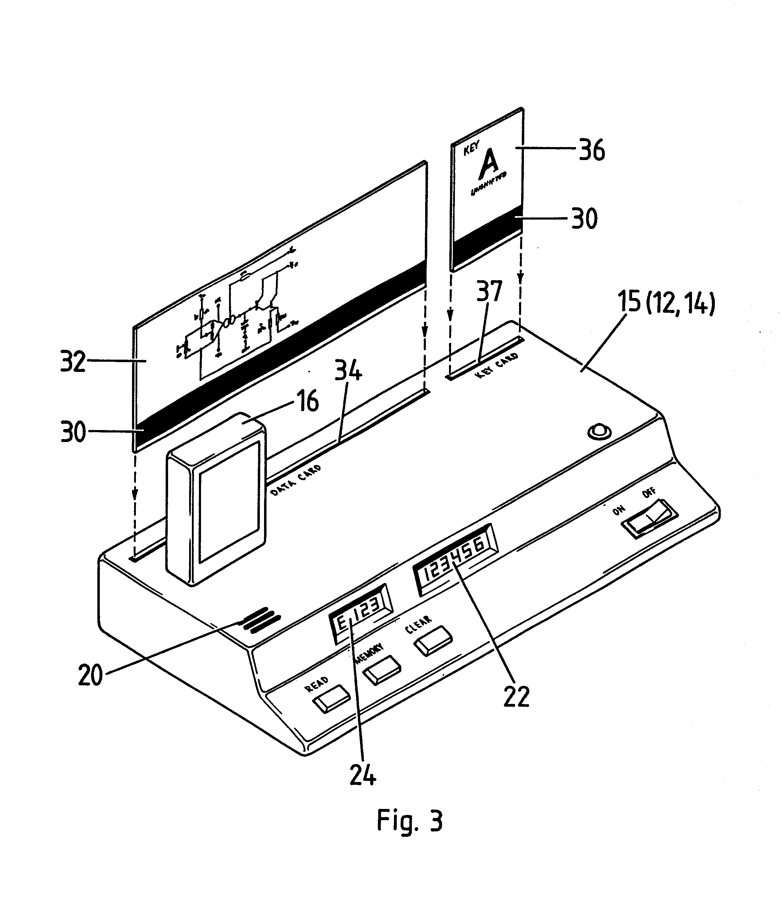

Bei der Programmiervorrichtung gemäß Figur 3 sind entsprechende Teile mit entsprechenden Bezugszeichen versehen. Hierbei sind die codierten Lesesymbole auf einem Magnetstreifen 30 gespeichert, der am Rand einer Karte 32 angeordnet ist, welche die betreffende zeichnerische Darstellung aufweist. Die Programmiervorrichtung weist einen entsprechenden Schlitz 34 auf, in den die Karte mit dem Magnetstreifen 30 einschiebbar ist. Ferner ist bei diesem Ausführungsbeispiel eine Magnetkarte 36 zur Schreibtastenbestimmung vorgesehen, deren Daten über einen Schlitz 37 einlesbar sind. Ein Vorteil des Einlesens über Magnetstreifen besteht darin, daß hier auf engem Raum wesentlich größere Datenmengen bei höherer Datendichte untergebracht werden können als bei einem Strichcode. Außerdem ist bei dieser Version das Kopieren der Lesesymbole nicht auf einfache Weise möglich.

Bei einem optischen Abtastsystem gemäß Figur 2 kann das Kopieren der Lesesymbole dadurch erschwert werden, daß diese in einer durch übliche Kopiergeräte nicht übertragbaren Farbe ausgeführt sind.

Als Strichcode eignet sich insbesondere ein solcher, bei dem die Balken unterschiedliche Helligkeit aufweisen, weil hierbei auch bei unterschiedlicher Abtastgeschwindigkeit eine eindeutige Informationsübertragung gewährleistet ist. Die optische Leseeinrichtung selbst kann dabei beispielsweise entsprechend der DE-OS 31 09 286 bzw. 31 09 288 bzw. 31 09 296 ausgebildet sein.

Patentansprüche:

1.  Verfahren zum Programmieren eines Festwert-Speichers eines digital gesteuerten Zeichengerätes, dadurch gekennzeichnet, daß in der Programmiervorrichtung (15) die Eingangssignale der Eingabeeinrichtung (14) von einem Codeleser (12; 26) zugeführt werden, der auf einem Aufzeichnungsträger aufgedruckte Informationen (28) abtastet.

2.  Anordnung zur Durchführung des Verfahrens gemäß Anspruch 1 zum Programmieren eines Festwert-Speichers eines digital gesteuerten Zeichengerätes, dadurch gekennzeichnet, daß die Daten (10) in codierter Form, zum Beispiel in Form von Strichmarkierungen (28) örtlich in einer katalogisierten Gesamtaufstellung einzelnen Zeichendarstellungen zugeordnet aufgedruckt sind, und daß ein insbesondere griffelförmiger Codeleser (12) zur Aufnahme der Daten und Überführung derselben in die Programmiervorrichtung (15) vorgesehen ist.

3. Anordnung nach Anspruch 2, dadurch gekennzeichnet, daß an den Eingang der Eingabeeinrichtung (14) eine Lesestufe (12) angeschaltet ist, der die codierten Daten (10) beliebiger Zeichen zuführbar sind, und daß die erkannten Lesesymbole eines Zeichens als Informationsdaten von der Eingabeeinrichtung (14) an der gewünschten Adresse eines Informationsspeichers (16) ablegbar sind.

4. Anordnung nach einem der Ansprüche 1 bis 3, dadurch gekennzeichnet, daß die codierten Daten (10) von einem optischen Sensor der Lesestufe (12) erkennbar und als Strichcode ausgeführt sind, und daß der Strichcode aus Balken unterschiedlicher Helligkeit besteht.

5. Anordnung nach Anspruch 2, dadurch gekennzeichnet, daß die Eingabeeinrichtung (14) baulich mit dem Zeichengerät (18) vereinigt ist.

6. Anordnung nach den Ansprüchen 2 und 3, dadurch gekennzeichnet, daß die codierten Daten von einem Magnetsensor der Lesestufe (12) erkennbar und auf einem Magnetstreifen angeordnet sind.

7. Anordnung nach Anspruch 2,
dadurch gekennzeichnet, daß die Informationsspeicher (16) als Steckmoduln ausgebildet
sind.

8. Anordnung nach Anspruch 7,
dadurch gekennzeichnet, daß die Moduln
als EEPROMS oder RAM Speicher wie z.B. Constant-
Memory-Moduln ausgebildet sind.

9. Anordnung nach den Ansprüchen 2 und 3,
dadurch gekennzeichnet, daß die codierten
Daten in Form alphanumerischer Zeichen ausgebildet sind, die über ein Schrifterkennungssystem der Lesestufe (12) abrufbar sind.

10. Anordnung nach einem der Ansprüche 2 bis 9,
dadurch gekennzeichnet, daß die codierten
Daten Funktionsbefehle darstellen, die
beispielsweise der Schreibspitzenauswahl,
Nullpunktverschiebung, Maßstabsveränderung,
Anheben und Absenken der Schreibspitze und
dergleichen dienen.

0102079

Fig. 1

2/3

0102079

Fig. 2

Fig. 3